# EUROPEAN PATENT APPLICATION

(11) **EP 2 058 967 A1**
(43) Date of publication of application: **13.05.2009**
(21) Application number: 07021809.4
(22) Date of filing: 09.11.2007
(51) Int. Cl.: H04J 13/02, H04L 27/26, H04W 16/00

(54) **Spatial division multiple access for high speed packet access modes**

(71) Applicant: Nokia Siemens Networks Oy, 02610 Espoo (FI)
(72) Inventor: Breuer, Volker, 16727 Bötzow (DE); Linder, Hermann, 84405 Dorfen (DE); Raaf, Bernhard, 82061 Neuried (DE); Zirwas, Wolfgang, 81249 München (DE)
(74) Representative: Becker Kurig Straus

(57) **Abstract**

The present application suggests a communications system comprising at least a first mobile terminal and a second mobile terminal. The transmission timing of one of the at least first and second mobile terminals is adjusted such that transmission signals of the first and second terminals are received substantially synchronously at a base station of the communications system. The scrambling code and at least a subset of channelization codes of the at least first mobile terminal and second mobile terminal are harmonized.

## Description

The present invention relates to wireless communications systems and more particular to virtual multiple input multiple output environments.

The demand for wireless bandwidth and wireless transmission capacity is driven by the development and use of new network-based applications operated on processing enhanced mobile communications terminals. The provision of additional wireless bandwidth and wireless transmission capacity requires typically great efforts by operators of mobile/cellular communications systems and is cost intensive. Hence, there is always a need for methodologies enhancing wireless bandwidth and wireless transmission capacity in given mobile communications systems, which can be implemented on the top requiring only moderate or little adaption and implementation efforts.

According to another exemplary aspect of the present invention, the present invention provides a method, in which at least a first mobile terminal and a second mobile terminal are identified. The transmission timing of one of the at least first and second mobile terminals is adjusted such that transmission signals of the first and second terminals are received substantially synchronously at a base station. The scrambling code and at least a subset of channelization codes of the at least first mobile terminal and second mobile terminal are harmonized.

One or more control messages are communicated between the base station and the at least first and second mobile terminal. The transmission timing may be adjusted on the basis of signal propagation measurements, which include transmission of timing pilot signals or timing plot signal messages between participating mobile terminals and base station.

The adjustment of the transmission timing and the harmonization of the scrambling code and the subset of channelization codes may be further included in one or more control messages communicated between base station and the mobile terminals, the first and/or the second mobile terminal participating in the aforementioned method. The one or more control messages include control information. The control information may be applicable to control the radio resources, of which the baseband circuits of the mobile terminals make use. In particular, the control information may include transmission timing control information, which allows a mobile terminal to adjust its transmission timing, wherein the adjustment may include a delaying of transmissions or an advancing of transmissions in relationship to a timing scheduling before adjustment. The control information may further include code harmonization information, which enables the receiving mobile terminal to harmonize its scrambling code and at least a subset of its channelization codes. Without limiting the invention thereto, the term harmonization may be understood as a re-allocation of the aforementioned scrambling code and the subset of channelization codes. The scrambling code and the subset of channelization codes of the mobile terminal to be harmonized may already be allocated by a radio resource managing controller of the mobile communications system, into which the mobile terminal, i.e. the first and/or second mobile terminal, is subscribed. The re-allocation allocates new scrambling code and a new subset of channelization codes, which may be included in the control information. The new scrambling code and a new subset of channelization codes may be the scrambling code and at least a subset of channelization codes, which have been already allocated by the radio resource managing controller of the mobile communications system to another mobile terminal, i.e. either the first or second mobile terminal. After harmonization, the first and second mobile terminal have allocated the same scrambling code and the same subset of channelization codes, i.e. the scrambling code and the subset of channelization codes of the first and second mobile terminal are harmonized.

It should be noted that harmonization or re-allocation is not intended to be understood that the harmonized mobile terminal makes automatically use of the re-allocated scrambling code and the re-allocated subset of channelization codes. In particular, the harmonized mobile terminal may make use of the re-allocated scrambling code and the re-allocated subset of channelization codes after reception of an indication.

According to an exemplary embodiment of the present invention, spatial signatures are determined at the base station in order to allow for signal differentiation of the terminal-specific transmissions.

According to an exemplary embodiment of the present invention, time periods required for signal transmission propagation from the at least first mobile terminal and second mobile terminal to base station are measured.

According to an exemplary embodiment of the present invention, a time difference or time delay is determined from the measured propagation periods.

According to an exemplary embodiment of the present invention, timing synchronization and code harmonization is indicated to the at least first mobile terminal and a second mobile terminal.

According to an exemplary embodiment of the present invention, the subset of channelization codes includes one or more channelization codes associated with one or more high speed packet access channels and more particularly the subset of channelization codes includes one or more channelization codes associated with one or more high speed uplink packet access channels.

According to an exemplary embodiment of the present invention, the subset of channelization codes includes one or more channelization codes associated with one or more enhanced dedicated physical data channels such as rate enhanced dedicated physical data channels.

According to another exemplary aspect of the present invention, the present invention provides a network entity. The network entity comprises a transmission timing measurement component and a code reallocation component. The transmission timing measurement component is adapted to measure transmission propagation periods of mobile terminals transmitting signals to the network entity and the transmission timing measurement component is adapted to instruct one of the mobile terminal to adjust its transmission timing on the basis of the measured transmission propagation periods to achieve substantially synchronous transmission signal reception at the network entity. The code reallocation component is adapted to instruct the mobile terminal to harmonize its scrambling code and at least a part of its channelization codes with another mobile terminal served by the network entity.

According to an exemplary embodiment of the present invention, the network entity is part of a code division multiple access technology based communications network. According to an exemplary embodiment of the present invention, the network entity is a base station. According to an exemplary embodiment of the present invention, the network entity is a network controller. Further, the functionality of the aforementioned network entity may be at least partly implemented in one of the base station and the network controller or may be the functionality of the aforementioned network entity may be implemented distributed among the base station and the network controller.

According to another exemplary aspect of the present invention, the present invention provides a mobile terminal. The mobile terminal comprises a timing adjustment component and a code reallocation component. The timing adjustment component is adapted to adjust the transmission timing upon receiving of a timing adjustment signal from a base station such that signals transmitted by the mobile terminal and signals transmitted by another mobile terminal are received substantially synchronously at the base station. The code reallocation component is adapted to harmonize its scrambling code and at least a subset of its channelization codes with the other mobile terminal served by the base station.

According to another exemplary aspect of the present invention, the timing adjustment component is further adapted to transmit a timing pilot signal to the base station at a defined point in time indicated by the base station to allow the base station to measure the transmission propagation period.

According to another exemplary aspect of the present invention, the mobile terminal is adapted to be operable with spatial division multiple access mode for transmissions to the base station upon reception of an indication to initiate the spatial division multiple access mode.

According to another exemplary aspect of the present invention, the the mobile terminal supports transmissions and receptions of data over code division multiple access (CDMA) technology based communications networks including for instance wideband code division multiple access (WCDMA) communications networks, universal mobile telecommunications systems (UMTS) and the like.

According to another exemplary aspect of the present invention, the present invention provides a system including the aforementioned network entity and wireless terminal.

These and other additional objects and features of the present invention will become readily apparent when the same are set forth in greater detail in the accompanying detailed description of the embodiments with reference being made to the drawings in which like reference numerals represent like or similar parts throughout and in which:
- Fig. 1: predicts schematically a basic wireless communications system according to an exemplary embodiment of the present invention;
- Fig. 2: predicts schematically an exemplary transceiver arrangement of the base station according to an exemplary embodiment of the present invention;
- Fig. 3: illustrates an exemplary transceiver arrangement of the terminal according to an exemplary embodiment of the present invention;
- Fig. 4: illustrates schematically a simplified code division multiple access (CDMA) technology based transmission scheme according to an exemplary embodiment of the present invention;
- Fig. 5: illustrates schematically a more complex spreading and scrambling scheme operable in WCDMA and UMTS, particularly according to an exemplary embodiment of the present invention;
- Fig. 6: illustrates schematically a simplified code division multiple access (CDMA) technology based transmission scheme according to an exemplary embodiment of the present invention;
- Fig. 7: illustrates schematically a simplified code division multiple access (CDMA) technology based transmission scheme according to a further embodiment of the present invention;
- Fig. 8: illustrates schematically the aforementioned spreading and scrambling procedures and their properties in uplink and downlink direction in a CDMA according to an exemplary embodiment of the present invention;
- Fig. 9: depicts schematically an exemplary methodology for determining an angle of incidence according to an exemplary embodiment of the present invention;
- Fig. 10: depicts schematically a block chart showing a first operational sequence according to an exemplary embodiment of the present invention;
- Fig. 11: depicts schematically a block chart showing a second operational sequence according to an exemplary embodiment of the present invention;
- Fig. 12: depicts schematically an exemplary embodiment of an enhanced terminal operable to perform an exemplary embodiment of the present invention is illustrated; and
- Fig. 13: depicts schematically an exemplary embodiment of an enhanced base station and resource controller operable to perform an exemplary embodiment of the present invention is illustrated.

The following embodiments are described in sufficient detail to enable those skilled in the art to practice the invention, and it is to be understood that the embodiments may be combined, or that other embodiments may be utilized and that structural, logical, and electrical changes may be made without departing from the spirit and scope of the present invention. It should be noted that references to "an", "one", or "various" embodiments in this document are not necessarily to the same embodiment, and such references contemplate more than one embodiment.

This document discusses, among other things, code division multiple access (CDMA) technology based communications systems. In particular, the operation of the code division multiple access (CDMA) technology based communications systems will be described in more detail. The code division multiple access (CDMA) technology based communications systems according to exemplary embodiments of the present invention may be used to implement mobile or cellular communications systems. For the sake of illustration and feasibility of the invention, exemplary references to wideband code division multiple access (WCDMA) communications systems and in particular universal mobile telecommunications systems (UMTS) will be made. It should be understood that the present invention is not limited to any specific implementation of a mobile or cellular communications system. Within the scope and principles of the invention, the concept may be implemented with similar and/or future communications systems.

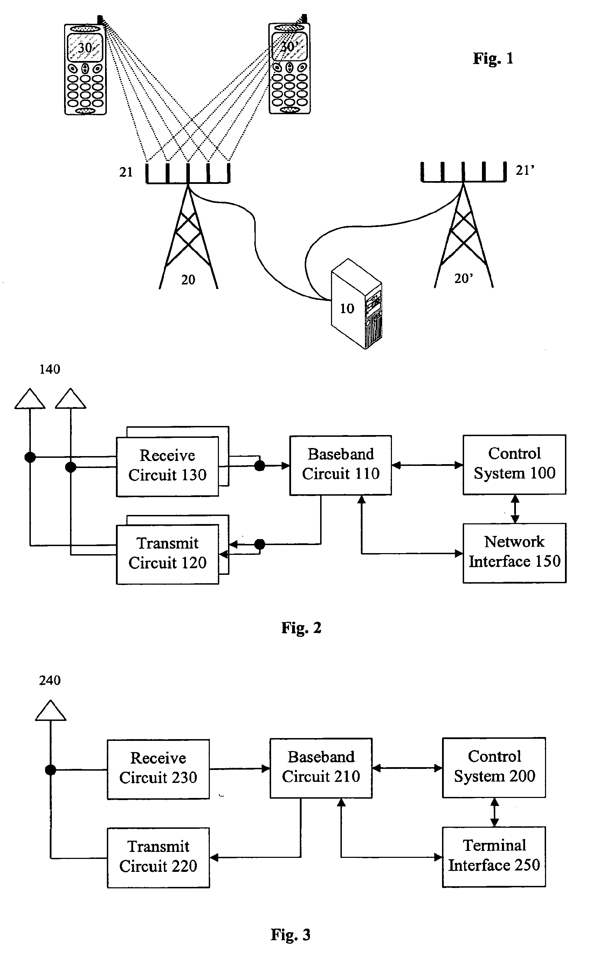

With reference to Fig. 1, a basic wireless communications system according to an exemplary embodiment of the present invention is schematically illustrated. The wireless communications system of Fig. 1 includes a resource controller 10 managing radio frequency resources and controlling the operation of one or more base stations 20, 20'. Each base station 20 covers a cell and facilitates wireless communication of the (mobile) terminals 30, 30' located within the coverage area of the cell associated with the respective base station 20.

Fig. 2 illustrates an exemplary transceiver arrangement of the base station 20 according to an exemplary embodiment of the present invention. The transceiver arrangement includes for instance a control system 100, a baseband circuit 110, a transmit circuit 120, a receive circuit 130, multiple antennas 140, i.e. an antenna array, and a network interface 150. The receive circuit 130 is operable to receive radio frequency signals through the antennas 140, which carry information from radio frequency transmitters of one or more terminals. The receiver circuit 130 comprises for instance an amplifier, one or more filters, a down-conversion circuit and an analog-to-digital converter circuit. The RF signal detected by the antennas is amplified, filtered signal and down-converted, which results to a baseband RF signal. The baseband RF signal is then digitized into one or more digital data streams provided to the baseband circuit 110.

The baseband circuit 110 is operable to process the data streams, which represent the data embedded in the RF signal transmitted from the one or more terminals. The baseband processing includes demodulating the digitized signal streams, decoding the demodulated streams and error correction mechanisms. The baseband circuit 110 may be implemented on the basis of one or more processors generally or specifically operable for processing digital signals such as digital signal processors (DSPs). The data obtained by baseband processing can then be transmitted through the network interface to controller of a core network of a mobile communications system such a radio network controller. The core network may distribute the data to the terminating entity through a packet-switched or circuit switched network coupled via one or more gateways interfacing the data thereto.

The baseband circuit 110 is operable to prepare the digital data streams, which represent data received via the network interface such as digitized voice data, video data, digital content data or control information. The digital data streams provision to the baseband circuit 110 is controlled by the control system 100. The baseband circuit 110 encodes the data for transmission. The transmit circuit 120 comprises for instance a modulator circuit and an amplifier. The transmit circuit 120 is operable to modulate the encoded data onto a carrier signal and amplify the modulated signal onto an appropriate power level for irradiation via the antennas 140.

The multiple antennas 140 and the receive and transmit circuits 120, 130 are operable for spatial diversity.

Fig. 3 illustrates an exemplary transceiver arrangement of the terminal 30 according to an exemplary embodiment of the present invention.

Analogously to the aforementioned transceiver arrangement of a base station, the transceiver arrangement of a terminal includes for instance a control system 200, a baseband circuit 210, a transmit circuit 220, a receive circuit 230, an antenna 240 and a user terminal interface 250. The receive circuit 230 is operable to receive radio frequency signals through the antenna 240, which carry information from radio frequency transmitter of the base station. The receiver circuit 230 comprises for instance an amplifier, one or more filters, a down-conversion circuit and an analog-to-digital converter circuit. The RF signal detected by the antenna 240 is amplified, filtered signal and down-converted, which results to a baseband RF signal. The baseband RF signal is then digitized into one or more digital data streams provided to the baseband circuit 210.

The baseband circuit 210 is operable to process the data streams, which represent the data embedded in the RF signal transmitted from the base station. The baseband processing includes demodulating the digitized signal streams, decoding the demodulated streams and error correction mechanisms. The baseband circuit 210 may be implemented on the basis of one or more processors generally or specifically operable for processing digital signals such as digital signal processors (DSPs). A digital signal processor (DSP) may be implemented as an application specific integrated circuit (ASIC). The data obtained by baseband processing can then be transmitted through the user terminal interface 250 to be presented audibly and/or optically to the user.

The baseband circuit 210 is operable to prepare the digital data streams, which represent data received via the user terminal interface 250 and the control system 200 such as digitized voice data, video data, digital content data or control information. The digital data streams provision to the baseband circuit 210 is controlled by the control system 200. The baseband circuit 210 encodes the data for transmission. The transmit circuit 220 comprises for instance a modulator circuit and an amplifier. The transmit circuit 220 is operable to modulate the encoded data onto a carrier signal and amplify the modulated signal onto an appropriate power level for irradiation via the antennas 240.

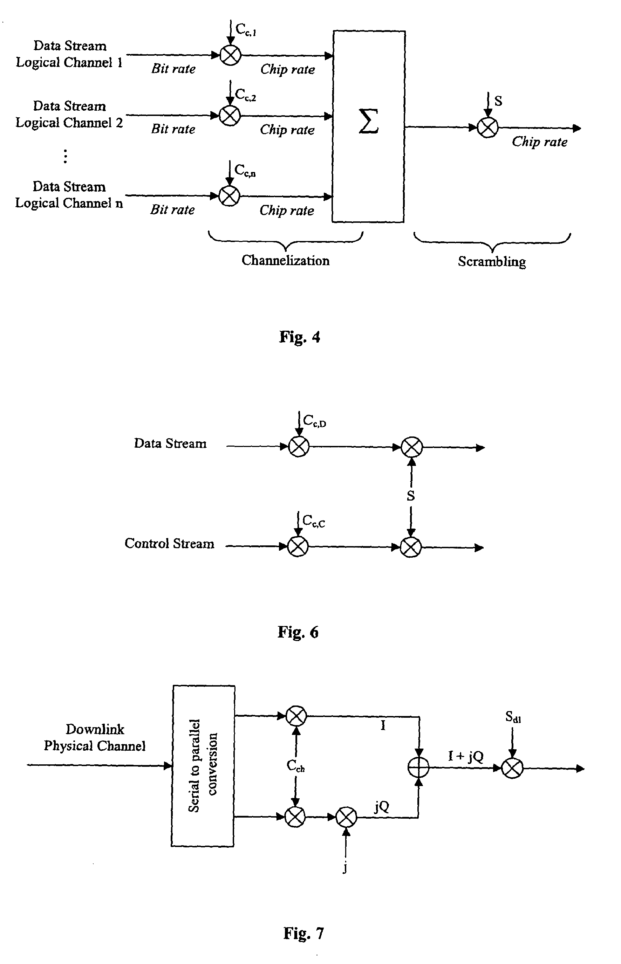

Fig. 4 illustrates schematically a simplified code division multiple access (CDMA) technology based transmission scheme in downlink direction according to an exemplary embodiment of the present invention. As illustrated in Fig. 4 a CDMA based technology in general uses a spreading code to separate one user's terminal transmissions from those of another terminal in the same cell. Under real conditions, there are multiple simultaneous data streams from multiple users' terminals and multiple simultaneous data streams from a single base station operating the data transmission within its coverage area, i.e. its cell. Therefore, not only is it necessary to separate the transmissions of one user's terminal or base station from those of another, it is also necessary to separate the various transmissions that a single user's terminal might generate. In other words, if a single user's terminal transmits user data as well as control information, the receiving base station has to be able to separate data transmissions from the user's terminal from data transmissions of all other users' terminals as well as separate the control information from the user's terminal data transmission.

In order to support this requirement, CDMA takes a two-step approach to the transmission from a single user's terminal, as exemplarily shown in Figure 4. First, each individual data stream having a predetermined bit rate is spread to the chip rate by the application of a spreading code, also known as a channelization code, and which operates at a predetermined chip rate. Then the combined set of spread signals is scrambled by the application of a scrambling code, which also operates at the predetermined chip rate.

The channelization spreads the individual data streams and hence increases the required bandwidth. Since the scrambling code also operates at the chip rate, the required bandwidth is not further increased. At the receiving end, the combined signal is first de-scrambled by application of the appropriate scrambling code. The individual user data streams are then recovered through the application of the appropriate channelization codes.

A number of different physical channels may be for instance used by a terminal in the uplink, with a given type of channel selected in accordance with what the terminal attempting to do such as simply request access to the network, send just a single burst of data, or send a stream of data. In a voice conversation for instance the terminal may use at least two physical channels: a data channel and a control channel, for instance Dedicated Physical Data Channel (DPDCH) and a Dedicated Physical Control Channel (DPCCH) in WCDMA and particularly UMTS implementation. The data channel (e.g. the DPDCH) carries the user data and the control channel (DPCCH) carries control information. Depending on the amount of data to be sent, a single terminal may use just a single data channel. In case of UMTS, the DPCCH may support up to 480 Kbps of user data or as many as six DPDCHs, which will support up to 2.3 Mbps of user data. A DPDCH can have a variable spreading factor. This simply means that the user bit rate does not have to be fixed to a specific value. The spreading factor for a DPDCH can be 4, 8, 16, 32, 64, 128, or 256. These correspond to DPDCH bit rates of 15 Kbps and up to 960Kbps. In high speed packet uplink access (HSPDA) mode, the spreading factor for an Enhanced Dedicated Physical Control Channel (E-DPDCH) can be 2 or 4. These correspond to E-DPDCH peak bit rates of 711 Kbps and up to 5742 Kbps depending on the E-DCH Category 1 and 6, respectively. According to the E-DCH Category 1 to 6, one to four E-DPDCHs may be used.

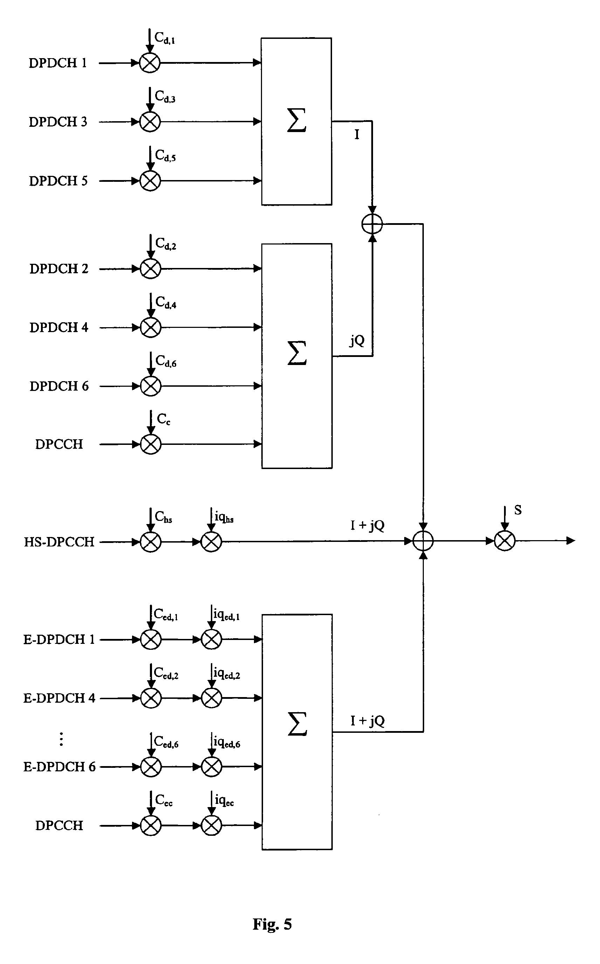

Fig. 5 schematically illustrates a more complex spreading and scrambling scheme, which is used in WCDMA and particularly UMTS. Fig. 5 shows how multiple DPDCHs, a HS-DPCCH, i.e. an uplink signaling channel for use with high speed packet download access (HSPDA), and multiple E-DPDCHs in WCDMA and particularly UMTS implementation are handled. Also shown is the DPCCH, which is sent whenever one or more DPDCHs are used and the E-DPCCH, which is sent whenever one or more E-DPDCHs are used.

The channelization codes C_{d,1} to C_{d,6} represent the channelization codes applied to each of the six DPDCHs. The channelization code applied to the DPCCH is represented as C_{c}. Each of the DPDCHs is spread to the chip rate by a channelization code. These DPDCHs 1, 3, and 5 are on the so-called I (in-phase) branch. DPDCHs 2, 4, and 6 and the DPCCH are on the so-called Q (quadrature) branch. The channelization codes C_{ed,1} to C_{ed,k} represent the channelization codes applied to each of the k E-DPDCHs. The channelization code applied to the DPCCH is represented as C_{ec}. Each of the E-DPDCHs is spread to the chip rate by a channelization code. The E-DPCCH should be also mapped on the I branch, whereas the mapping of the E-DPDCHs depends on the number of DPDCHs and on whether an HS-DSCH is configured for the terminal.

Each spread channel is further weighted by an individual gain factor (not shown). For the sake of simplicity, the different gain factors are out of the scope of the present invention and are not considered in further detail herein.

Mathematically, the spread signals on the Q branch are treated as a stream of imaginary bits. These are summed with the stream of real bits on the I branch to provide a stream of complex-valued chips at the chip rate. This stream of complex-valued chips is then subjected to a complex-valued scrambling code, which is aligned with the beginning of a radio frame.

As aforementioned, the channelization codes are used to separate multiple streams of data from a given user's terminal, whereas the scrambling codes are used to separate transmissions from different users' terminals in uplink transmission.

The channelization codes may be based on orthogonal spreading factors and particularly orthogonal variable spreading factors (OVSF). The use of orthogonal variable spreading factors allows spreading factors to be changed and orthogonality between different spreading codes of different lengths to be maintained. The channelization codes are selected from a code tree, which proper used also allows de-spreading according to the smallest spreading factor. The selection of the channelization codes may be subjected to certain restrictions.

The download orthogonal codes within each base station are managed by the radio controller controlling the operation of one or more base station.

Once the different channels have been spread with appropriate channelization codes, the different spread channels are combined, as exemplarily shown in Fig. 5, and then scrambled by a particular scrambling code. In WCDMA and particular UMTS, two types of scrambling codes may be used: long and short scrambling codes. The choice of a particular code is determined by the type of physical channel in question and by the higher layer that requires the use of a channel in the first place.

The scrambling codes should have pseudo-random characteristics. Such pseudo-random (PN) scrambling codes may be generated by the use of a linear feedback register. In WCDMA and particular UMTS so-called Gold codes, which are constructed from modulo 2 addition of portions of two binary m-sequences.

The stream of spread and scrambled signals, such as for instance the output shown in the exemplary embodiment of Fig. 5, forms a complex-valued stream of chips. The real and imaginary part may be separated, with the real part of a given complex chip forming the in-phase (I) branch and the imaginary part forming the quadrature phase (Q) branch in a modulator, which is for instance operable with quadrature phase shift keying (QPSK) modulation as for instance used in WCDAM and in particular UMTS.

Fig. 6 illustrates schematically a simplified code division multiple access (CDMA) technology based transmission scheme in uplink direction according to an exemplary embodiment of the present invention. In uplink direction, all users' terminals transmit independently from each other. Therefore and due to the different distances to the base station, all signals within a cell are received asynchronously. The channelization codes are used to provide different spreading factors. As aforementioned, the channelization codes may be based on orthogonal spreading factors and particularly orthogonal variable spreading factors (OVSF). The use of orthogonal variable spreading factors allows spreading factors to be changed and orthogonality between different spreading codes of different lengths to be maintained. The channelization codes are selected from the aforementioned code tree.

The user's terminal identification is obtained by the combination of the spreading (channelization) code and scrambling code. The terminal's signature is the product signal of the spreading (channelization) code and scrambling code. The spreading (channelization) code as well as the scrambling code is hence user specific. The spreading (channelization) codes are further used to separate the physical channels. This is, the spreading (channelization) codes separate the user data channel (and the user data channels in multicode transmission, respectively) from the control information. Fig. 6 illustrates schematically the separation of the user data channel from the control information channel on the basis of an exemplary simplified embodiment.

Fig. 7 illustrates schematically a simplified code division multiple access (CDMA) technology based transmission scheme in downlink direction according to a further embodiment of the present invention. The downlink channels are spread to the chip rate and scrambled, as shown in Figure 7. Each channel to be spread is split into two streams: the I branch and the Q branch. For instance, the even symbols are mapped to the I branch and the odd symbols are mapped to the Q branch. The I branch is treated as a stream of real-valued bits, whereas the Q branch is treated as a stream of imaginary bits. Each of the two streams is spread by the same channelization code C_{ch}. The spreading code or channelization code to be used is taken from the same code tree as used in the uplink transmission scheme. That is, OVSF codes that are chosen to maintain the orthogonality between different channels transmitted from the same base station. The spreading rate for a given channel depends on the channel in question.

The I and Q streams are then combined such that each I and Q pair of chips is treated as a single complex value, such that the result of combining them is a stream of complex-valued chips. This stream of chips is then subjected to a complex downlink scrambling code, identified as S_{d1} in Fig. 7.

As aforementioned with reference to the uplink transmission scheme, the data for a given physical channel (such as a single DPDCH) is directed either to the I branch or the Q branch, as shown in Figure 5. In the downlink transmission scheme illustrated in Fig. 7 each channel is subjected to a serial-to-parallel conversion. For a given spreading/channelization factor, the serial-to-parallel conversion effectively doubles the data rate of the physical channel. In other words, half of the channel's data is carried on the I branch with half on the Q branch, and both of these are spread with the same spreading factor. In case of WCDMA and particularly UMTS, a spreading factor of 8 results then to a data rate on the I channel of 480 Kbps and the data rate on the Q channel of also 480Kbps. The net data rate is 960 Kbps

The downlink scrambling codes S_{d1} are used to separate the transmissions of one cell (base station) from those of another. The down-link scrambling codes are Gold codes similar to the scrambling codes used in the uplink. For the sake of implementation, the totality of available downlink scrambling codes may be separated into 512 groups, each group of which comprises one primary scrambling code and 15 secondary scrambling codes. Thus, 512 primary scrambling codes exist and 7,680 secondary scrambling codes exist, for a total of 8,192 downlink scrambling codes.
A cell is allocated one primary scrambling code, which has 15 secondary scrambling codes associated with it. A base station will use the primary scrambling code for the transmission of channels that need to be decodable by all terminals in the cell. For instance, paging messages should be scrambled by the cell's primary scrambling code. For that matter, all transmissions from the base station may simply use the cell's primary scrambling code. After all, it is the scrambling code that identifies the cell, while the various channelization codes are used to separate the various transmissions (physical channels) within the cell. A base station may choose to use a secondary scrambling code for channels that are directed to a predetermined user's terminal or a predetermined group of users' terminals.

As is the case for the uplink embodiment exemplarily described above, the downlink may use QPSK modulation. In addition, the downlink may further use 16QAM (quadrature amplitude modulation) scheme or in case of high speed downlink packet access (HSDPA) transmission, the downlink may use 64QAM (quadrature amplitude modulation) scheme. Each complex-valued chip is split into its constituent real and imaginary parts. The real part is sent on the I branch of the modulator and the imaginary branch is sent on the Q branch of the modulator.

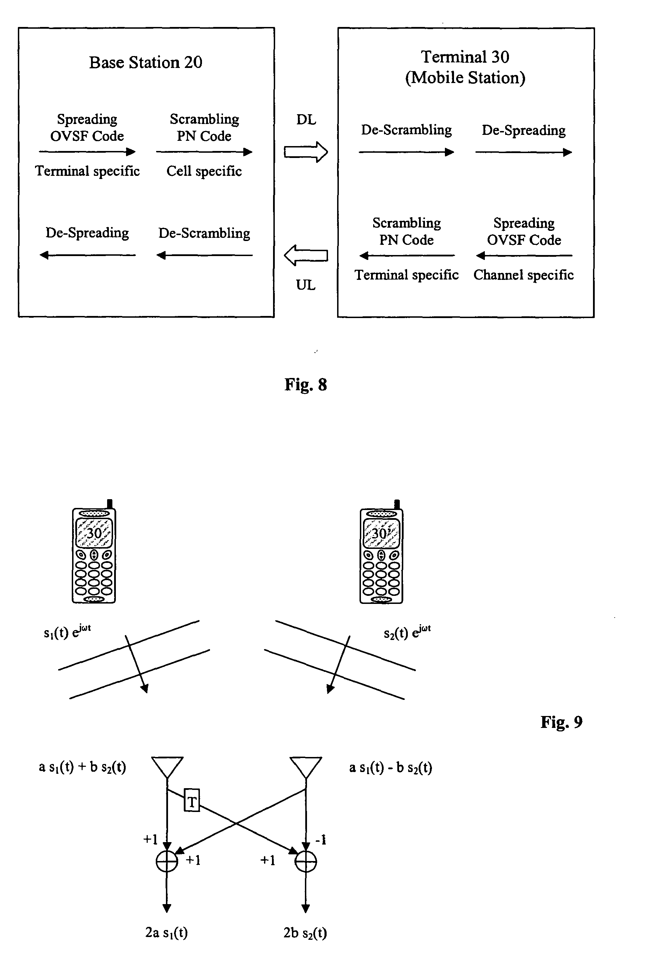

Fig. 8 illustrates schematically the aforementioned spreading and scrambling procedures and their properties in uplink and downlink direction in a CDMA.

Referring back to Fig 1, the base station 20, 20' is equipped with several antennas and the (mobile) terminals served by the base station are each provided with a single antenna, which keeps the complexity of the terminals moderate.

In uplink direction, i.e. transmissions from one or the terminals to the base station, the multiple antennas of the base station may be used to from a so-called single input multiple output (SIMO) antenna group. The transmitting terminal transmits its signal over a radio frequency channel. By spatial combining the signal received at each antenna of the base station, an enhanced reception gain can be achieved.

Multiple antenna systems (MIMO) attracted attention over the past years due to their potential in increasing the spectral efficiency without increasing the bandwidth. Multiple users can be served within these systems by separating them in terms of space. This principle is called Space Division Multiple Access (SDMA), which can be understood as using different beams at the transmitter for the different users. If a base station has to cover a large geographical area, the region may be split into sectors where the same carrier frequency can be reused in each sector. Therefore, for a large number of sectors there is a high level of frequency reuse, which increases the capacity. In this form the transmitted power of the base station may limit the number of sectors that may be associated with a base station since the level of interference at a base station is determined by the spatial separation between sectors, as the terminals are using the same frequency.

However, the capacity of the base station may be increased further by spatially focusing the transmitted energy along the direction of the intended terminals. In this way, transmission can be achieved at the same carrier frequency simultaneously with different terminals. This can be accomplished by using an array of antennas at the base station and either a switched beam array or a tracking beam array can be used to direct the electromagnetic energy to the intended terminals.

Further enhancement in the capacity of a communication system may be achieved primarily in the implementation of SDMA, which uses an adaptive process and a collection of antennas called phased arrays. A phased array antenna system combines the output from each antenna element using different weights. The weights modify the amplitude and phase of the voltages received at each antenna element. Through an appropriate combination of the voltages that are induced in them by the incident electromagnetic fields, an antenna beam can be formed. This antenna beam can either be steered continuously or the beam can be switched along certain prefixed directions by selecting a set of a priori weights.

The multiple antennas may be further operable to determine the angle of incidence of a radio frequency signal transmitted by a terminal. An exemplary methodology for determining an angle of incidence is schematically illustrated in Fig. 9. The wave front of a radio frequency signal irradiated by a terminal device is detected at two spaced antennas with a time delay, which depends on the distance of two antennas and the angle of incidence relative to the base line of the antennas. The delay element T allows for adjusting the antennas to a defined angle of incidence. The spacious information about the angle of incidence, the so-called spatial signature, can hence be used to distinguish radio frequency signals transmitted by different terminals.

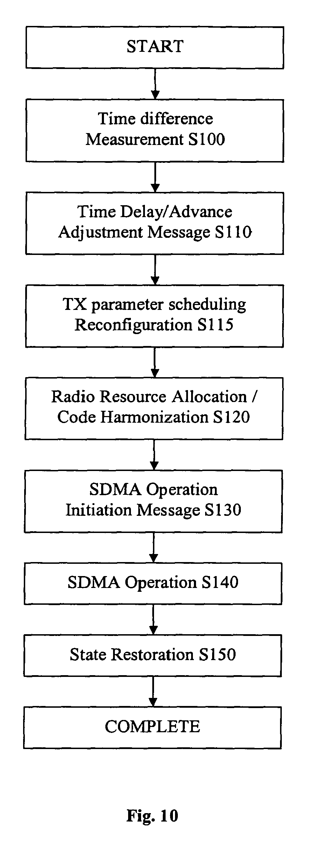

Referring to Fig. 10, a first operation sequence according to an exemplary embodiment of the present invention is illustrated.

In an operation S100, the propagation time periods or measurements of the propagation time periods of radio frequency signals transmitted from at least a first terminal 30 and second terminal 30' to the base station 20 is determined. The at least a first and second terminals may be configured to transmit a measurement signal or timing pilot signal at predefined point in times with respect to a common time base.

In an operation S110, a time difference or time delay between the determined propagation time periods or measurements of the propagation time periods is determined.

The transmission timing of at least one of the at least first or second terminal is adjustable. In an operation S115, the adjustable terminal is instructed to adjust its transmission timing such that the at least first and second terminals transmit in synchronicity. Transmission in synchronicity means that wave fronts of radio frequency signals transmitted by the at least first and second terminals arrive at the same point in time at the multiple antennas of the base station 20. This is the wave fronts of radio frequency signals arrive at the same point in time at the multiple antennas of the base station 20 with respect to a reference point of the multiple antennas.

In particular, the time adjustment, i.e. the synchronization of the radio frequency signal transmission of the at least first and second terminals, may be achieved by shifting the future transmission timing of the terminal with earlier transmission timing. The adjustment or shifting of the timing may be performed by a number of time samples within the processing window of a predefined number of chips such as ±148 chips. The number of time samples is determined from the time period difference measured above.

In an operation S120, the codes of the at least first and second terminals are harmonized.

The scrambling codes of the different terminals are allocated thereto during an access setup procedure. A resource manager of the code division multiple access (CDMA) technology based communications system allocates the scrambling codes to ensure uniqueness of the cell of a base station and eventually adjacent cells of further base stations. As aforementioned, the scrambling codes identify the different terminals and are conventionally used to differentiate transmissions therefrom at the base station.

The scrambling code of one of the at least first and second terminals is reallocated such that the scrambling codes of the at least first and second terminals are harmonized.

As aforementioned, the scrambling codes are managed and allocated by a resource manager of the code division multiple access (CDMA) technology based communications system. A reallocation of the scrambling code of one of the at least first and second terminals may be performed by the responsible resource manager or may be initiated by the base station or one of the terminals for their part. The latter base station or one of the terminals can reallocate the scrambling code without taking the risk of additional interference, in particular, inter-cell interference because the responsible resource manager has already allocated the scrambling code to be harmonized such that the aforementioned risk of interference is excluded.

Hence, involvement of the resource manager into the reallocation/harmonization procedure of the scrambling code among the at least first terminal and second terminal is not mandatory.

The codes to be harmonized between the at least first and second terminals also include the channelization codes. As aforementioned, the channelization codes are used in uplink to distinguish the channels used by the terminal in uplink transmission to the base station. Hence, the number of channelization codes allocated to a terminal depends on the number of channels requested and allocated to the terminal. This is the at least first and second terminals may have allocated different numbers of channelization codes.

If the number of channelization codes used is different for the at least first and second terminals, the subset of the channelization codes may be harmonized, which means that a partial SDMA transmission according to an exemplary embodiment of the present invention is enabled.

Alternatively, the reallocation procedure may dismiss or disregard the channelization codes of that terminal having the lower number of channelization codes in use and instead allocated the channelization codes of that terminal using the higher number of codes. Hence, the at least first and second terminals have then allocated the higher number of channelization codes.

The reallocation of the channelization codes, which have been originally allocated by the resource manager of the code division multiple access (CDMA) technology based communications system can be performed under the responsibility of the base station or one of the first and second terminals.

In an operation S140, the spatial diversity multiple access (SDMA) operation is operable when the transmission is synchronized and the aforementioned codes resources are harmonized.

The beginning of the SDMA transmission operation may be automatically initiated with reallocation of the scrambling and channelization codes. Alternatively, an initiation message indicating the initiation of the SDMA transmission operation may be transmitted by the base station (S130) or one of the terminal devices ensuring that the participating terminals, i.e. the at least first and second terminals, are aware of the initiation of the SDMA operation.

In an operation S 150, the reallocated scrambling and channelization codes may be restored after completion of the SDMA transmission operation.

The aforementioned SDMA transmission operation is operable with high speed packet access (HSPA) transmission operation including high speed uplink packet access (HSUPA) and high speed download packet access (HSDPA).

During SDMA transmission operation, transmission of the code harmonized first and second terminals cannot be distinguished anymore because the scrambling code of both terminals is the same. In order to distinguish the transmissions of the code harmonized first and second terminals the different spatial signatures of the transmissions are determined at the base station. On the basis of the spatial signatures the transmissions can be associated with the first or second terminal such that the transmissions of the terminals are distinguishable although the used scrambling code is the same.

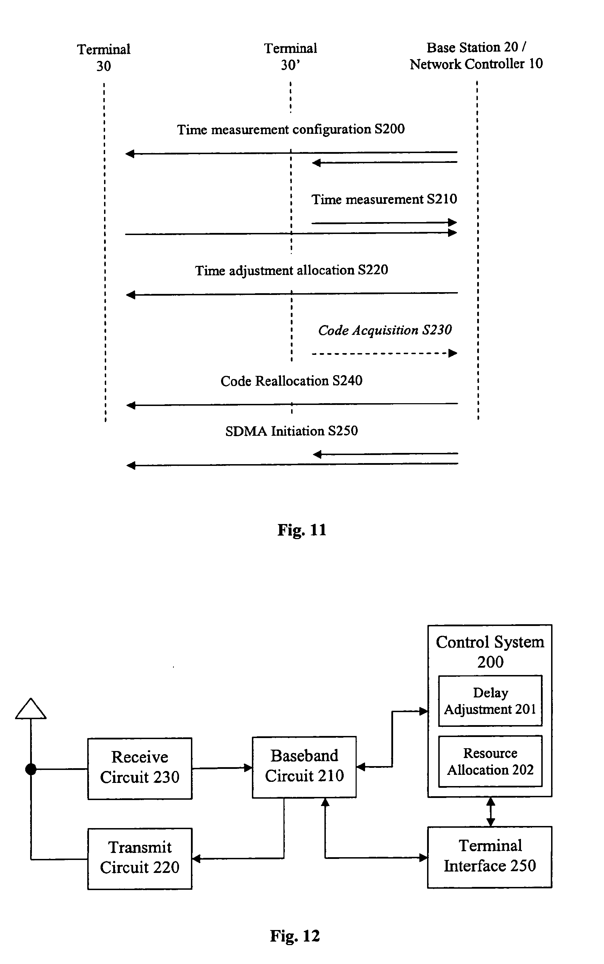

With reference to Fig. 11, a second operation sequence according to an exemplary embodiment of the present invention is illustrated, which operation sequence illustrates the communication between the entities participating in the operation sequence.

In an operation S200 the base station (e.g. Node B) or the resource controller (e.g. radio network controller) instructs at least two terminals to send a timing pilot signal to the base station at a predefined moment in time, on the basis of which pilot signals the propagation time of the radio frequency signals from the terminals to the base station can be measured.

In an operation S210, the terminals instructed for transmitting the timing pilot signals transmit the timing pilot signals to the base station, which measures the propagation time and determines the time difference therebetween. The transmission timing of one of the terminals, herein terminal 30 is adjusted in accordance with the transmission timing advance determined by the base station.

In an operation S240, the scrambling code and at least a subset of the channelization codes of one of the terminals, herein terminal 30, is reallocated such that the scrambling code and at least a subset of the channelization codes are harmonized with the scrambling code and channelization codes of the other terminal, herein terminal 30'.

In an operation S250, the base station then informs the participating terminals 30, 30' about the successful configuration and the initiation of the spatial division multiple access (SDMA) mode.

It should be mentioned that although the transmissions of the terminals is synchronized, control signals are not synchronized and therefore it might now happen that transmission (TX) parameters like transmission (TX) power are changed within a data transmission period. In such a case, the data packets of this data transmission period will be lost. Such a data packet lost should be avoided. Different approaches can be used to avoid the above situation. In a first approach, a pre-compensation is proposed. In a second approach, timing advance described above should be only allowed, if there is no change in control parameters. According to the third approach new transmission (TX) parameters are applied to the next transmission signal. During a current transmission, the application of new transmission (TX) parameters is postponed.

In WCDMA and particularly UMTS, the scrambling code of a terminal is allocated to the terminal during the access procedure from the serving radio network controller (RNC) which operates the radio resource control layer (RRC layer). The RRC layer is inter alia responsible for establishment, maintenance and release of an RRC connection between the terminal and the radio access network, in particular the UMTS radio access network (UTRAN), and control of radio bearers, transport channels and physical channels.

A Node B, i.e. a base station, supports a common control port and a set of traffic termination point, each controlled by a dedicated control port. The Node B application part (NBAP) is divided into two components, the common NBAP that defines the signaling procedure across the common signaling link, and the dedicated NBAP sued in the dedicated signaling link. The dedicated NBAP functions include inter alia addition, release and reconfiguration of radio links for one UE context, handling of dedicated and shared channels, and initialization and reporting of radio link specific measurement.

At least one of the terminal devices and the base station or resource controller, i.e. in case of WCDMA and particularly UMTS the node B or the radio network controller, has to be operable with the aforementioned operation sequence.

The adjustment of the transmission timing as well as the reallocation of the codes, i.e. the scrambling code and the channelization codes, has to be supported by the terminal device. Moreover, the initial time delay measurement has further to be supported. The different operations may require adaption of the terminal. With reference to Fig. 12, an exemplary embodiment of an enhanced terminal operable to perform an exemplary embodiment of the present invention is illustrated. The exemplary embodiment of the terminal shown in Fig. 12 additionally illustrates a timing adjustment component 201 and a resource reallocation component 202.

The timing adjustment component 201 is operable to adjust the transmission timing of the terminal such that transmission synchronicity at the base station with at least another terminal is obtainable. The adjustment component 201 may be further operable to generate a transmission timing measurement signal or timing pilot signal on the basis of which the transmission propagation delay for transmitting a radio frequency signal from the terminal to the base station can be measured.

The resource reallocation component 202 is operable to accept a reallocation instruction upon reception of which the scrambling code and one or more channelization codes used by the terminal are reallocated to the instructed codes.

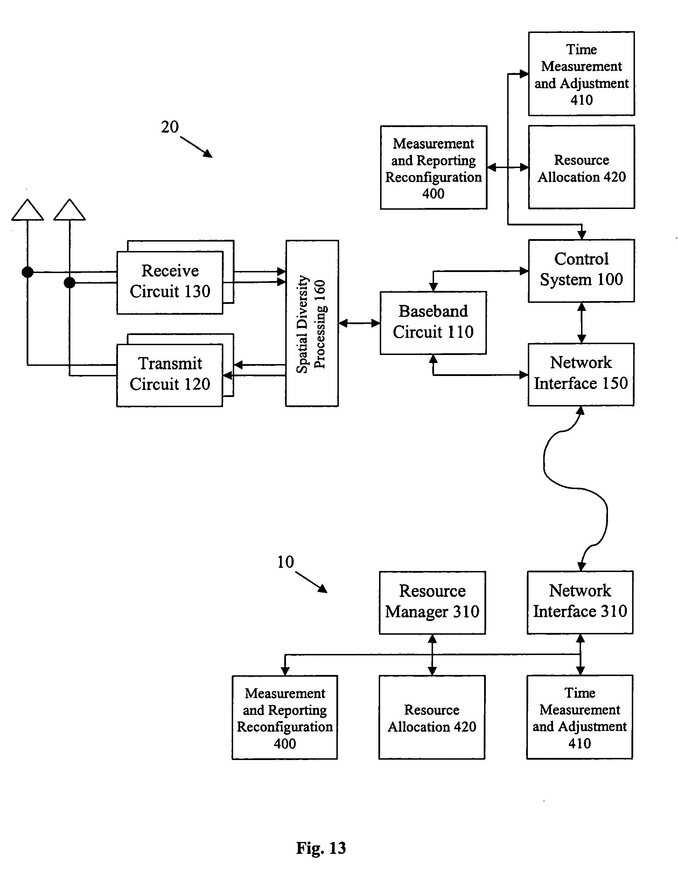

With reference to Fig. 13 an exemplary embodiment of an enhanced base station and resource controller operable to perform an exemplary embodiment of the present invention is illustrated. The exemplary embodiment of the base station shown in Fig. 13 additionally illustrates a resource allocation component 420, time measurement and adjustment component 410 and measurement and reporting reconfiguration 400. The time measurement and adjustment component 410 is operable to measure the timing propagation period of radio frequency signals transmitted from terminals to the base station, to determine the time delay of radio frequency signals received from different terminals at the base station, and to instruct at least one terminal to adjust its transmission timing in accordance with the determined time difference. The allocation component 420 is adapted to instruct at least one terminal for reallocating the scrambling and channelization codes in order to harmonize the scrambling and channelization codes with at least another terminal having (already) allocated the scrambling and channelization codes.

The measurement and reporting reconfiguration 400 is operable to prevent any change of transmission (TX) parameters like transmission (TX) power a data transmission period in order to avoid loss of data packets.

Although the above methodology according to an exemplary embodiment of the present invention have been described and exemplarily illustrated in the context of two terminals, which are to be synchronized in transmission timing and harmonized in code allocation, those skilled in the art will appreciate on the basis of the above description that the exemplary methodology can be likewise operated with a group of terminals, which are to be synchronized in transmission timing and harmonized in code allocation. The principles of the above described exemplary methodology should not be understood as being limited to a specific number of participating terminals.

The exemplary methodology of the present invention and an exemplary implementation thereof allows for e.g. wideband code division multiple access (WCDMA) high speed packet access (HSPA) spatial division multiple access (SDMA), also called as virtual multiple input multiple output (MIMO), mode in addition to single user multiple input multiple output (MIMO) while maintaining the advantages of spatial division multiple access (SDMA) including for instance increased spectral efficiency of a cell, i.e. in particular for terminals having implemented a single transmit and receive antenna, or increased throughput compared to single user multiple input multiple output (MIMO) due to better rank of the radio channels. This significantly improves the cell throughput and therefore decreases the costs for the operator. The exemplary methodology of the present invention and an exemplary implementation thereof further provides time and code alignment for terminals with minimum effort and protocol overhead and allows for even more advanced cooperative antenna schemes like joint transmission/detection which includes interference cancellation, e.g. for inter-sector interference cancellation.

From the forgoing description, it will be apparent that modifications can be made to the system without departing from the teaching of the present invention. Accordingly, the scope of the invention is only to be limited as necessarily by the accompanying claims.

## Claims

1. Method, comprising:
identifying at least a first mobile terminal and a second mobile terminal;
adjusting transmission timing of one of the at least first and second mobile terminals to achieve substantially synchronous transmission signal reception at a base station; and
harmonizing a scrambling code and at least a subset of channelization codes of the at least first mobile terminal and second mobile terminal.

2. Method according to claim 1, wherein control information enabling the adjustment of the transmission timing and the harmonization of the scrambling code and the subset of channelization codes is included in form of one or more control messages communicated between base station and the at least first or second mobile terminal.

3. Method according to claim 1 or claim 2, comprising:
determining spatial signatures at the base station for terminal-specific transmission signal differentiation.

4. Method according to anyone of the claims 1 to 3, comprising:
measuring time periods required for signal transmission propagation from the at least first mobile terminal and second mobile terminal to base station.

5. Method according to anyone of the claims 1 to 4, comprising:
determining a time difference between the measured propagation periods.

6. Method according to anyone of the claims 1 to 5, comprising:
indicating timing synchronization and code harmonization to the at least first mobile terminal and a second mobile terminal.

7. Method according to anyone of the claims 1 to 6, wherein the subset of channelization codes includes one or more channelization codes associated with high speed packet access channels.

8. Method according to anyone of the claims 1 to 7, wherein the subset of channelization codes includes one or more channelization codes associated with one or more enhanced dedicated physical data channels.

9. Network entity, comprising:
a transmission timing measurement component operable to measure transmission propagation periods of at least a first and a second mobile terminal transmitting signals to the network entity and operable to instruct one of the at least first and second mobile terminal to adjust its transmission timing on the basis of the measured propagation periods to achieve substantially synchronous transmission signal reception at the network entity; and
a code reallocation component operable to instruct one of the at least first and second mobile terminal to harmonize its scrambling code and at least a part of its channelization codes with another one of the at least first and second mobile terminal served by the network entity.

10. Network entity according to claim 9, wherein control information enabling the adjustment of the transmission timing and the harmonization of the scrambling code and the subset of channelization codes is included in one or more control messages communicated by the network entity to the at least first and/or second mobile terminal.

11. Network entity according to claim 9 or claim 10, wherein the subset of channelization codes includes one or more channelization codes associated with high speed packet access channels.

12. Network entity according to anyone of the claims 9 or claim 11, wherein the subset of channelization codes includes one or more channelization codes associated with one or more enhanced dedicated physical data channels.

13. Network entity according to anyone of the claims 9 to 12, wherein the transmission timing measurement component is operable to instruct the mobile terminals to transmit a timing pilot signal at a predetermined common point in time and wherein the transmission timing measurement component is operable to determine a time difference between the measured propagation periods on the basis of which adjustment of the transmission timing is instructable.

14. Network entity according to anyone of the claims 9 to 13, wherein the network entity is part of a code division multiple access technology based communications network.

15. Network entity according to anyone of the claims 9 to 14, wherein the network entity is a base station.

16. Network entity according to anyone of the claims 9 to 15, wherein the network entity is a network controller.

17. Mobile terminal, comprising:
a timing adjustment component operable to adjust the transmission timing upon receiving of a timing adjustment signal from a base station such that signals transmitted by the mobile terminal and signals transmitted by another mobile terminal are received substantially synchronously at the base station; and
a code reallocation component operable to harmonize its scrambling code and at least a subset of its channelization codes with the other mobile terminal served by the base station.

18. Mobile terminal according to claim 17, wherein the timing adjustment component is operable to transmit a timing pilot signal to the base station at a defined point in time indicated by the base station to allow the base station to measure the transmission propagation period.

19. Mobile terminal according to claim 17 or claim 18, wherein the timing adjustment signal, the scrambling code and the subset of channelization codes are included in one or more control messages communicated to the mobile terminal.

20. Mobile terminal according to anyone of the claims 17 to 19, wherein the mobile terminal is operable with spatial division multiple access mode for transmissions to the base station upon reception of an indication.

21. Mobile terminal according to anyone of the claims 17 to 20, wherein the mobile terminal supports code division multiple access technology base communications networks.

22. Mobile terminal according to anyone of the claims 17 to 21, wherein the subset of channelization codes includes one or more channelization codes associated with high speed packet access channels.

23. Mobile terminal according to anyone of the claims 17 to 22, wherein the subset of channelization codes includes one or more channelization codes associated with one or more enhanced dedicated physical data channels.

24. System, comprising:
a mobile terminal according to anyone of the claims 17 to 23; and
a network entity according to anyone of the claims 9 to 16.
